# EUROPEAN PATENT APPLICATION

(11) **EP 2 650 627 A2**
(43) Date of publication of application: **16.10.2013**
(21) Application number: 13163175.6
(22) Date of filing: 10.04.2013
(51) Int. Cl.: F25D 23/06

(54) **A method to create vacuum insulated cabinets for refrigerators**

(30) Priority: 11.04.2012 US 201261622821 P; 15.03.2013 US 201313833635
(71) Applicant: Whirlpool Corporation, Benton Harbon MI 49022 (US)
(72) Inventor: Cur, Nihat, Benton Harbor, MI 49022 (US); Wu, Guolian, Benton Harbor, MI 49022 (US)
(74) Representative: Nicholls, Michael John

(57) **Abstract**

A method to form a vacuum insulated cabinet including forming a first basin having a first basin flange extending from a first basin opening and comprising a front surface, and forming a second basin having a second basin flange extending away from a second basin opening and comprising a rear surface. A barrier film and a heat sealing layer are disposed onto the first and second basins. The front surface of the first basin flange is disposed to the rear surface of the second flange to form a core cavity volume between the first and second basins. A core cavity material is disposing within the core cavity volume. The first and second basin flanges are sealed together, and gas is extracted from the core cavity volume through at least one port. The core cavity volume is hermetically sealed to form a vacuum insulated cabinet structure.

## Description

The invention is in the field of vacuum insulated cabinets and methods for creating vacuum insulated cabinets for use in refrigerators.

In one aspect, the method includes the steps of forming a first basin having at least four side walls defining a first basin opening, a rear wall, a first basin inner facing surface, a first basin outer facing surface, and a first basin integrated perimetrical flange extending from the first basin opening. The first basin integrated perimetrical flange has a front facing surface. The method also includes the step of forming a second basin having at least four side walls defining a second basin opening, a rear wall, a second basin inner facing surface, a second basin outer facing surface, and a second basin integrated perimetrical flange extending away from the second basin opening. The second basin integrated perimetrical flange has a rear facing surface. A barrier film that includes at least one hermetic barrier film and at least one heat sealing layer are disposed onto the first and second basins. The front facing surface of the first basin integrated perimetrical flange is disposed onto the rear facing surface of the second basin integrated perimetrical flange such that the first basin inner facing surface is disposed proximate the second basin outer facing surface. In this manner, a cabinet structure is formed having a core cavity volume configured to maintain a vacuum between the first basin and the second basin. The method also includes the step of disposing at least one core material into the core cavity volume, where the core cavity material is a low thermal conductivity material. The front facing surface of the first basin integrated perimetrical flange and the rear facing surface of the second integrated perimetrical flange are hermetically sealed together, such that the heat sealing layer on the first basin is sealed to the heat sealing layer of the second basin. Gas is extracted from the core cavity volume through at least one port disposed on the cabinet structure to create the vacuum within the core cavity and form the vacuum insulated cabinet structure.

In another aspect, the method for creating an integral vacuum insulated appliance includes the steps of: (1) providing an insulative first basin having at least four side walls defining a first basin opening, a rear wall, a first basin inner facing surface, a first basin outer facing surface, and a first basin integrated perimetrical planar flange extending away from the first basin opening where the first basin integrated perimetrical planar flange includes a front facing surface; and (2) providing an insulative second basin having at least four side walls defining a second basin opening, and a rear wall, a second basin inner facing surface, a second basin outer facing surface, and a second basin integrated perimetrical planar flange extending away from the second basin opening where the second basin integrated perimetrical planar flange includes a rear facing surface; (3) disposing a barrier film that has at least one hermetic barrier film and at least one heat sealing layer onto the first and second basins; (4) disposing at least one core material into at least a portion of the core cavity; (5) disposing the front facing surface of the first basin integrated perimetrical flange to the rear facing surface of the second basin integrated perimetrical flange such that the first basin inner facing surface is disposed proximate the second basin outer facing surface, such that a cabinet structure is formed having a core cavity volume and configured to maintain a vacuum within the core cavity between the first basin and the second basin; (6) hermetically sealing the core cavity volume; and (7) extracting gas from the core cavity volume through at least one port disposed on the cabinet structure, to create the vacuum within the core cavity and form the vacuum insulated cabinet structure.

Yet another aspect of the present invention is generally directed to a refrigerator that includes a vacuum insulated cabinet structure. The vacuum insulated cabinet structure includes a first basin having at least four side walls defining a first basin opening, a rear wall, a first basin inner facing surface and a first basin outer facing surface, and a first basin integrated perimetrical flange extending from the first basin opening. The first basin integrated perimetrical flange has a front facing surface. A second basin includes at least four side walls defining a second basin opening, and a rear wall, a second basin inner facing surface and a second basin outer facing surface, and a second basin integrated perimetrical flange extending away from the second basin opening. The second basin integrated perimetrical flange includes a rear facing surface. A barrier film is disposed on the first and second basins. The barrier film includes at least one hermetic barrier film and at least one heat sealing layer. The front facing surface of the first basin integrated perimetrical flange is hermetically sealed to the rear facing surface of the second basin integrated perimetrical flange. In this manner, the first basin inner facing surface is disposed proximate the second basin outer facing surface, thereby defining a cabinet structure and further defining a core cavity volume configured to maintain a vacuum within the core cavity between the first basin and the second basin. At least one core material is disposed substantially throughout the core cavity, where the at least one core cavity material is a low thermal conductivity material. The vacuum insulated cabinet structure may further comprise: a compartment surface defined by the second inner facing surface; and at least one integrated mullion integrated with the compartment surface, wherein the integrated mullion and the compartment surface define at least two sub compartments within the vacuum insulated cabinet structure. The refrigerator may further comprise a metal clad outer cabinet having an interior surface defining a receptacle configured to receive the cabinet structure. The first and second basin integrated perimetrical flanges may be configured to be planar flanges extending outward from the first and second basin openings, respectively. A cooling module may be disposed within an interior of the integrated mullion. The cabinet structure may include at least one conduit disposed in the cabinet structure and through the core cavity, each at least one conduit defined by a substantially tubular extrusion comprising a first basin end, a second basin end, and a length substantially defined by the perpendicular thickness of the core cavity, and wherein the substantially tubular extrusion extends from a second basin conduit opening in any one of one of the rear wall or the at least four side walls of the second basin to a first basin conduit opening in a corresponding location in the first basin, wherein the first and second basin ends of the substantially tubular extrusion are sealed at the first basin conduit opening and the second basin conduit opening, respectively, to maintain a vacuum within the core cavity. The cabinet structure may comprise: a compartment surface defined by the second inner facing surface; at least one mullion receptacle, defined by a receptacle channel disposed on the compartment surface, wherein the at least one conduit is disposed in the receptacle channel of the at least one mullion receptacle; one or more mullions disposed in the at least one mullion receptacle, wherein each of the one or more mullions comprise an interior and two or more sub-compartment surfaces; at least one cooling module set disposed on the interior of at least one of the one or more mullions, wherein the interior surface thereof is in fluid communication with the at least one conduit; and two or more sub-compartments disposed within the vacuum insulated cabinet structure and defined by the two or more sub-compartment surfaces of each of the one or more mullions and the compartment surface.

The invention will be further described by way of example with reference to the appended drawings, in which:

FIG. 1 is a top perspective view of a refrigerator containing one embodiment of the vacuum insulated cabinet;

FIG. 2 is a top exploded perspective of one embodiment of the vacuum insulated cabinet;

FIG. 3 is flow diagram of one embodiment of the method to create the vacuum insulated cabinet of FIG. 2;

FIG. 4 is top perspective of the vacuum insulated cabinet of FIG. 2;

FIG. 5 is a cross-sectional view of the vacuum insulated cabinet of FIG 4 taken at line V-V;

FIG. 6 is a front elevational view of vacuum insulated cabinet of FIG. 3;

FIG. 7 is a rear elevational view of vacuum insulated cabinet of FIG. 3;

FIG. 8 is a side elevational view of vacuum insulated cabinet of FIG. 3;

FIG. 9 is a top plan view of vacuum insulated cabinet of FIG. 3;

FIG. 10 is a bottom plan view of the vacuum insulated cabinet of FIG. 3;

FIG. 11 is a top perspective view of another embodiment of the vacuum insulated cabinet;

FIG. 12 is a top exploded perspective view of a refrigerator with an alternate embodiment of the vacuum insulated cabinet removed;

FIG. 13 is a top exploded perspective view of a refrigerator with another alternate embodiment of the vacuum insulated cabinet removed;

FIG. 14 is a detail section view of a different embodiment of the vacuum insulated cabinet; and

FIG. 15 is a detail section view of another different embodiment of the vacuum insulated cabinet.

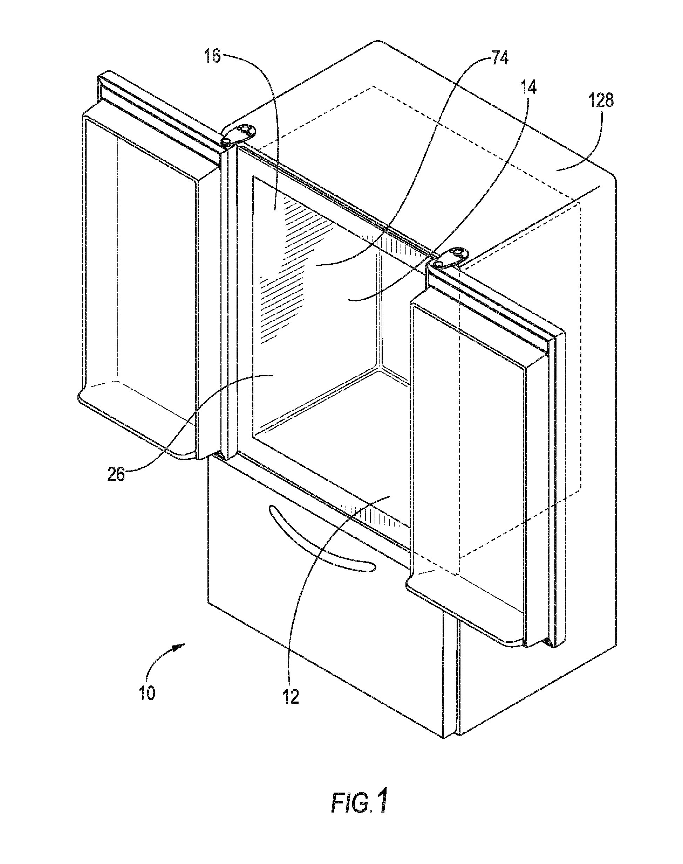

For purposes of description herein, the terms "upper," "lower," "right," "left," "rear," "front," "vertical," "horizontal," and derivatives thereof shall relate to the invention as oriented in FIG. 1. However, it is to be understood that the invention may assume various alternative orientations except for expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

With respect to FIG. 1, a refrigerator 10 is generally shown. In each of these embodiments, the refrigerator can have an interior 12 and a main cooling loop. At least a portion of the interior 12 can include one or more compartments 14. The main cooling loop can include at least one evaporator proximate the at least one compartment 14, where the at least one evaporator provides cooling to the at least one compartment 14 within the interior 12.

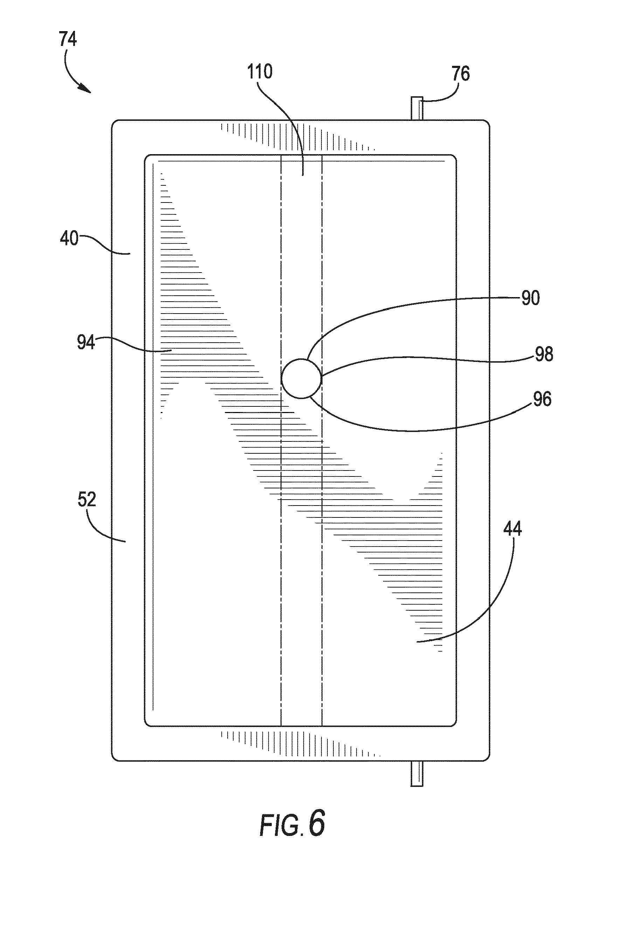

A first aspect, as illustrated in FIGS. 1-6, includes a method for creating a vacuum insulated cabinet 16 that can be inserted into the interior 12 of the refrigerator 10 to form the one or more compartments 14 within the interior 12 of the refrigerator 10.

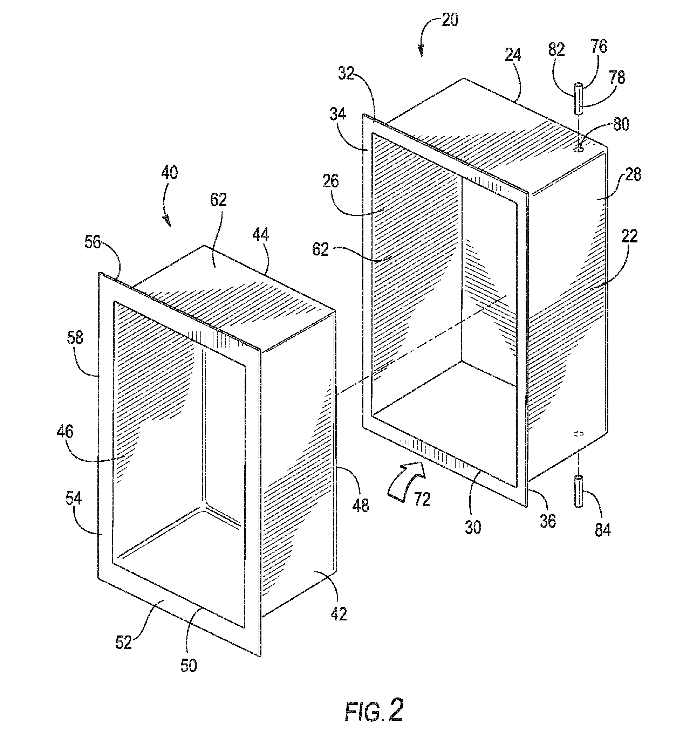

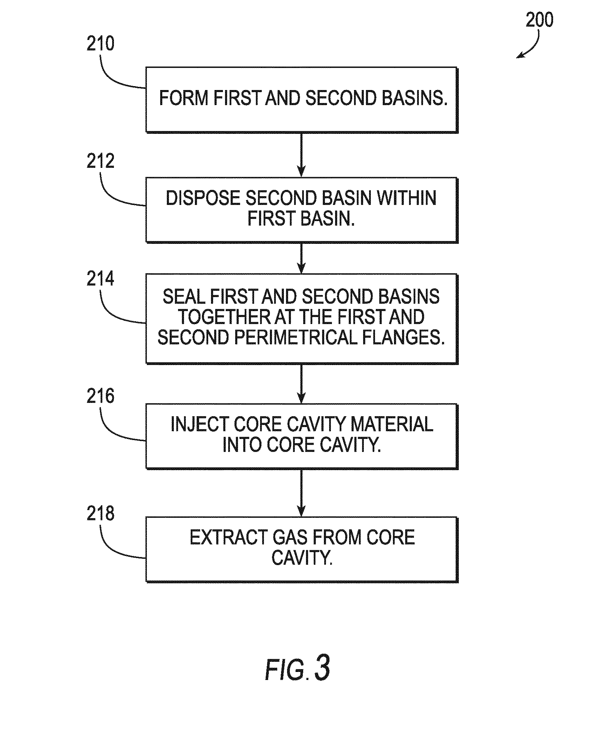

Referring to FIGS. 2 and 3, one aspect of the method 200 includes the step 210 of providing a first basin 20 that contains at least four side walls 22 and at least one rear wall 24. The side and rear walls 22, 24 define an inner facing surface 26 and an outer facing surface 28. The four side walls 22 also define a first basin opening 30 from which a first parametrical flange 32 extends. The first parametrical flange 32 can be planar and extends away from the inner facing surface 26 of the first basin 20. The flange 32 includes a front surface 34 and a rear surface 36.

As shown in FIGS. 2-4, step 210 of the method also includes providing a second basin 40 is also provided. The second basin 40 includes at least four side walls 42 and at least one rear wall 44 defining a second inner facing surface 46 and a second outer facing surface 48. The four side walls also define a second basin opening 50 of the second basin 40. A second parametrical flange 52 is typically planar. The second parametrical flange 52 can also be disposed to the second basin opening 50. The second parametrical flange 52 extends away from the inner facing surface 46 of the second basin 40. The second parametrical flange 52 has a forward facing surface 54 and a rear facing surface 56. The second parametrical flange 52 typically has the same slope as the first parametrical flange 32.

In addition, as shown in FIGS 2-5, the first and second basins 20, 40 are formed such that the first basin 20 has a larger opening 30 and a larger inner facing surface 26 than the opening and outer facing surface 50, 48 of the second basin 40, so that the second basin 40 can fit within the first basin 20. In addition, the second parametrical flange 52 extends away from the second basin opening 50 a sufficient distance so that the outer perimeter 58 of the second parametrical flange 52 extends over the first basin opening 30. In this manner, the rear facing surface 56 of the second parametrical flange 52 can be disposed to the forward facing surface 34 of the first parametrical flange 32 to create a vacuum cabinet 60 as will be further described below.

According to one embodiment, the first and second basins 20, 40 can be made of materials that include, but are not limited to, high impact polystyrene or acrylonitrile butadiene styrene, that has been thermally formed into the shape described above. While not preferred, it is understood that the first and second basins 20, 40 can also be formed by attaching the four side walls 22, 42 each having a flange and attaching a rear wall 24, 44, to form the basins 20, 40 described above.

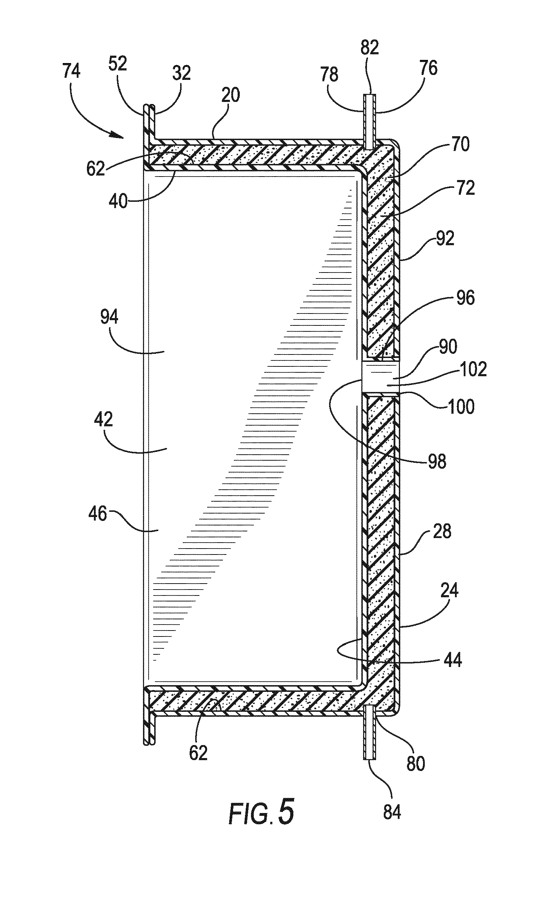

Referring again to the illustrated embodiment as shown in FIGS. 2 and 5, a barrier film 62 can be provided on the first and second basins 20, 40. The barrier film 62 can include at least one layer of polymeric barrier films and at least one heat sealing layer. The one or more polymeric barrier films can include, but are not limited to, ethylene vinyl alcohol copolymer or polyvinylidene chloride films. The barrier film 62 can be disposed upon the first and second basins 20, 40 by thermally forming the barrier film 62 onto the first and second basins 20, 40, by methods that include, but are not limited to, laminating the barrier film 62 onto the first and second basins 20, 40, co-extruding the barrier film 62 with the first and second basins 20, 40, or coating the barrier film 62 onto the material used for the first and second basins 20, 40. The barrier film 62 provides a hermetic surface to the first and second basins 20, 40 to increase the ability of the cabinet structure 74 to retain a vacuum within the core cavity volume 70. The barrier film 62 can be disposed on the inner facing surface 26 of the first basin 20 and the outer facing surface 48 of the second basin 40, whereby the barrier film 62 is disposed proximate the core cavity volume 70 and also substantially seals the core cavity volume 70. In less preferred embodiments, the barrier film 62 can be disposed on the outer facing surface 28 of the first basin 20 and the inner facing surface 46 of the second basin 40.

In alternate embodiments, the first and second parametrical flanges, 32, 52 may extend toward the first and second basin inner facing surfaces 26, 46. In another alternate embodiment, the first parametrical flange 32 may extend toward the first basin inner facing surface 26, and the second parametrical flange 52 may extend away from the second basin inner facing surface 46, such that the parametrical flanges 32, 52 can overlap at the core cavity volume 70 and form the vacuum cabinet 60.

As shown in FIGS. 2 and 3, another step 212 of the method 200 includes disposing a core cavity material 72, which can be a low thermal conductivity material within the opening 30 of the first basin 20 such that the core cavity material 72 is disposed along the first basin inner facing surface 26.

As shown in FIGS. 2-5, the method 200 also includes the step 214 of disposing the second basin 40 within the first basin 20 such that the outer facing surface 48 of the second basin 40 can be disposed proximate the inner facing surface 26 of the first basin 20, and the rear facing surface 56 of the second parametrical flange 52 can be disposed against the forward facing surface 34 of the first parametrical flange 32. In this manner, the core cavity material 72 is contained within a core cavity volume 70 defined by the space between the outer facing surface 48 of the second basin 40 and the inner facing surface 26 of the first basin 20.

In various embodiments, the core cavity material 72 can be an injectable material which, as will be described more fully below, can be injected into the core cavity volume 70 through at least one port 76. In alternate embodiments, the core cavity material 72 can be a preformed substantially rigid material, where the preformed shape of the core cavity material 72 typically substantially matches the shape of the core cavity volume 70. In such an embodiment, the preformed core cavity material 72 is configured to be received by the inner facing surface 26 of the first basin 20, and is further configured to receive the outer facing surface 48 of the second basin 40. In this manner, the preformed core cavity material 72 substantially fills the core cavity volume 70 without having to inject the core cavity material 72. In addition, the preformed core cavity material can allow the manufacturer to inspect the quality of the core cavity material 72 before installation to substantially ensure that the core cavity material 72 is disposed substantially throughout the core cavity volume 70.

Referring again to the embodiment illustrated in FIGS. 2-5, the method 200 also includes the step 216 of hermetically sealing the first and second basins 20, 40 together at the first and second parametrical flanges 32, 52 to form a cabinet structure 74. The core cavity material 72 can be sealed within the core cavity volume 70. It should be understood that the method for sealing the first basin 20 to the second basin 40 can vary. The method used in the various embodiments are sufficient to hermetically seal the core cavity volume 20 to maintain the desired vacuum within the core cavity volume 70 of the cabinet structure 74. These sealing methods can include, but are not limited to, heat sealing or ultrasonic welding. The combination of the polymeric barrier films and the at least one heat sealing layer in conjunction with the method of sealing the first and second basins 20, 40 together at the first and second parametrical flanges 32, 52, creates a vacuum within the core cavity volume 70 that can be maintained for extended periods of time, such as, at least five, ten or fifteen years.

The first and second basins 20, 40 can be sealed together through for the use of a separate sealing cap disposed proximate the outer facing surface 28 of the first basin 20 and the inner facing surface 46 of the second basin 40, which encloses the core cavity volume 70. The sealing cap can be made of the same material as the first and second basins 20, 40 and also can include the same barrier film 62 disposed upon first and second basins 20, 40, as described above.

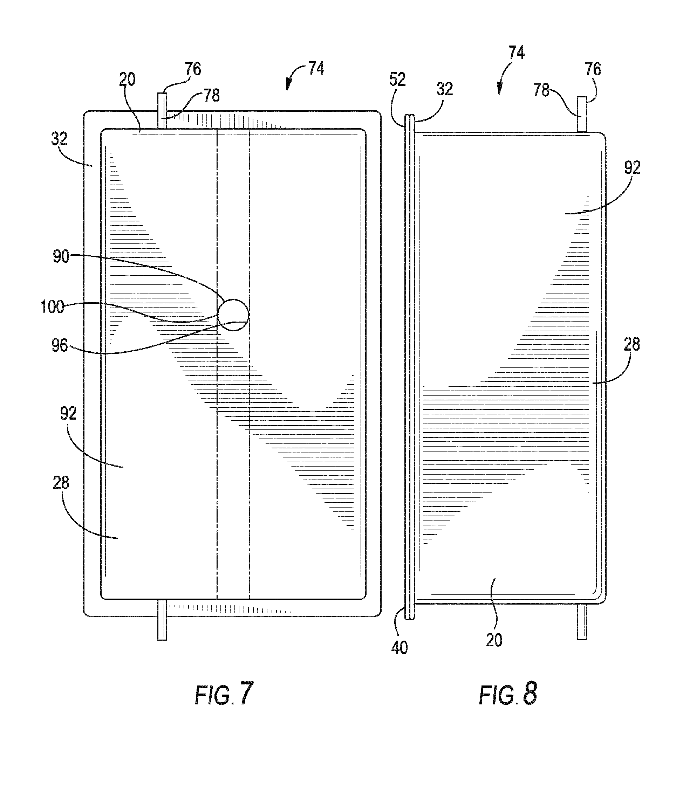

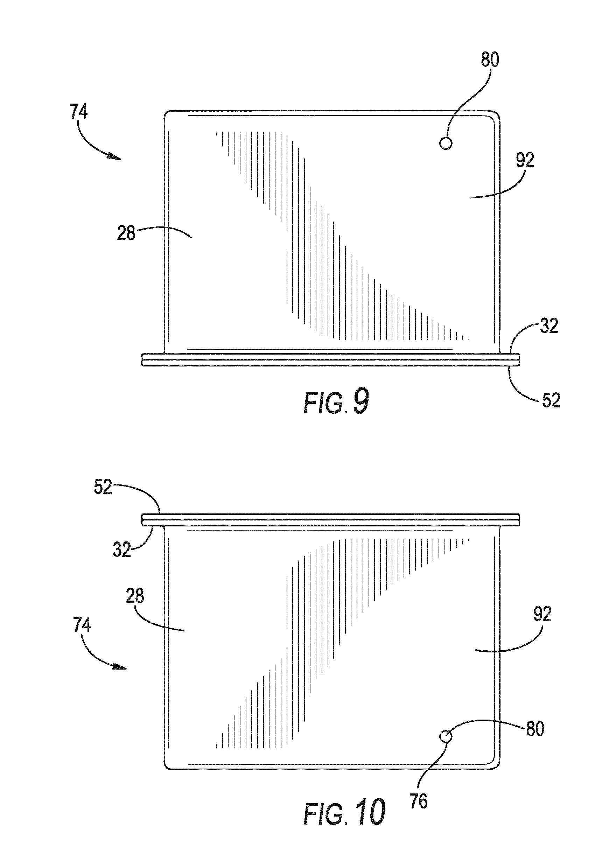

Referring now to the illustrated embodiment as illustrated in FIGS. 2-10, at least one port 76 can be disposed to the outer surface 48 of the first basin 40. The port 76 can include an extruded tube 78 that can be attached to an opening 80 in one of the side walls 22 or the rear wall 24 of the first basin 20. The port 76 provides a fluid communication between the first basin outer facing surface 28 and the core cavity volume 70, so that material can be passed from within the core cavity volume 70 to the outside 92 of the cabinet structure 74, or vice versa.

As illustrated in FIGS. 2-5, the method 200 further includes the step 218 of extracting gas 86 from the core cavity volume 70. After the second basin 40 and the first basin 20 are sealed together, the port 76 can be used as a vacuum port 82 to draw out the gas 86 that may be present in the core cavity volume 70 with the core cavity material 72. Once the desired amount of gas 86 is extracted from the core cavity volume 70, the port 76 can be removed, and the port opening 80 in the side wall 22 or rear wall 24 can be hermetically sealed to maintain a vacuum within the core cavity volume 70.

It should be understood that in various embodiments, more than one port 76 may be used to extract gas 86 from the core cavity volume 70. In addition, while not preferred, the ports 76 may also be disposed on the inner facing surface 46 of the second basin 40.

As shown in FIGS. 3-6, the method 200 can be modified such that the core cavity material 72 can be disposed within the core cavity volume 70 after the first basin 20 is hermetically sealed to the second basin 40. The at least one injection port 84 can be disposed to the outer facing surface 28 of the first basin 20 at a port opening 80 so that there can be fluid communication between the outer facing surface 28 of the first basin 20 and the core cavity volume 70. The core cavity material 72 can then be injected through the injection port 84 into the core cavity volume 70. Vacuum ports 82 can also be disposed on the outer surface 28 of the first basin 20 as described above to extract gas 86 from the core cavity volume 70, and to aid in the injection of the core cavity material 72 throughout the core cavity volume 70. Once the desired amount of core cavity material 72 is injected into the core cavity volume 70, and the desired amount of gas 86 is extracted from the core cavity volume 70, the injection port 84 and vacuum port 82 can be removed and the port openings 80 sealed thereby creating the desired vacuum within the core cavity volume 70.

In various embodiments, while not preferred, the injection ports 84 and vacuum ports 82 may be disposed on the inner facing surface 46 of the second basin 40. Also, while not preferred, the injection and/or vacuum ports 82, 84 may be disposed on the second parametrical flange 52 with a port opening 80 through at least one of the flanges 32, 52 and into the core cavity volume 70.

It should be appreciated that a perfect vacuum is not necessary. Various levels of gas 86 may remain within the core cavity volume 70 without degrading the efficiency or effectiveness of the cabinet structure 74 created by the method described above.

As shown in FIG. 5, the core cavity volume 70 of the cabinet structure 74 can have a substantially consistent thickness throughout the core cavity volume 70. In alternate embodiments, as will be more fully described below, variations in this cavity thickness can be provided to accommodate various functional aspects of the refrigerator. These variations in the thickness of the core cavity volume 70 do not affect the efficiency or effectiveness of the refrigerator cabinet structure 74.

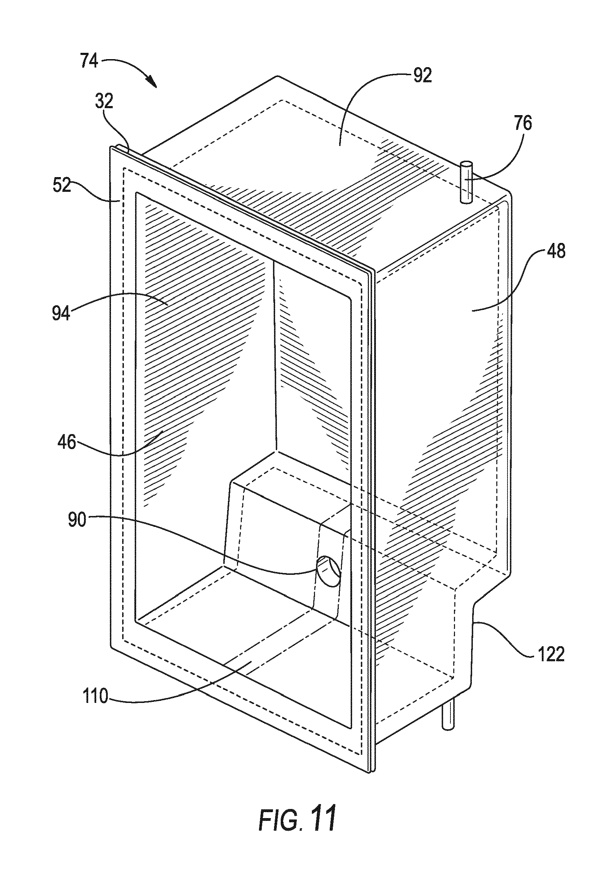

As shown in FIG. 11, the outer surface 92 of the cabinet structure 74 can be configured to at least partially define one or more external cavities 122. By way of explanation and not limitation, the external cavities 122 defined by the outside surface 92 of the cabinet structure 74 are configured to accommodate mechanical equipment for implementing the various functions of the refrigerator 10.

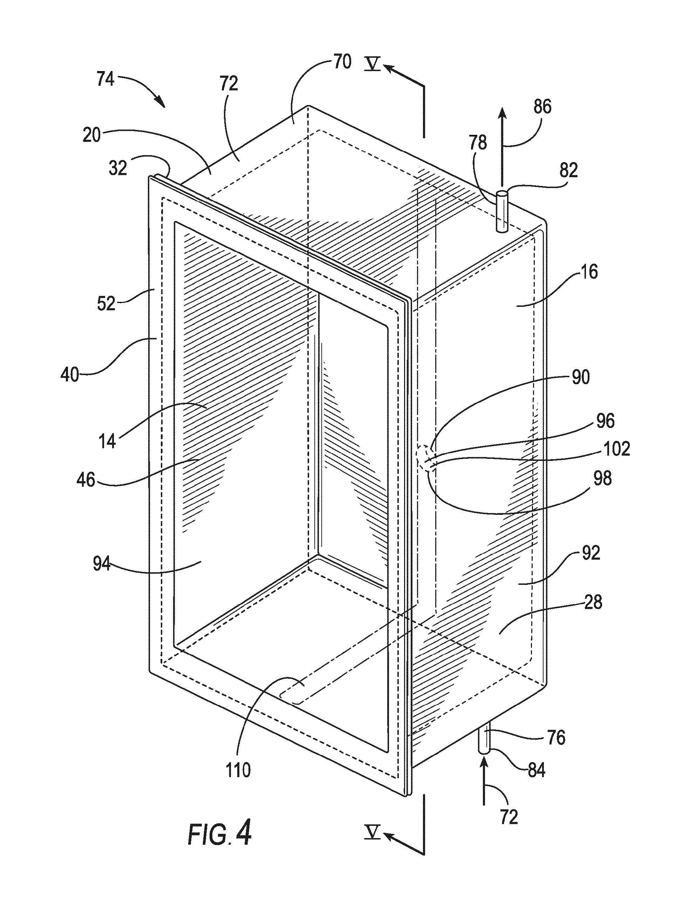

Referring back to FIGS. 4-7, at least one conduit 90 can be provided in the cabinet structure 74 that provides fluid communication from the outside surface 92 of the cabinet structure 74 to the inside surface 94 of the cabinet structure 74. Each conduit 90, as will be more fully described below, provides an access point for mechanical equipment, wiring, or cooling to pass through the cabinet structure 74 without interrupting or interfering with the vacuum within the core cavity volume 70.

Additionally, as shown in FIGS. 4-7, each conduit 90 includes an extruded flange 96 that extends from a first conduit opening 98 in the rear wall 44 of the second basin 40. The extruded flange 96 can be tubular in shape and extend away from the first conduit opening 98 a distance similar to the perpendicular thickness of the core cavity volume 70. The extruded flange 96 can be received by the first basin 20 at a second conduit opening 100 in the first basin 20. The conduit openings 98, 100 for each conduit 90 are disposed in the second and first basins 40, 20, respectively, to accommodate a desired path of travel for the extruded flange 96. While a perpendicular path of travel from the first conduit opening 98 to the second conduit opening 100 is preferred, non-orthogonal paths of travel may also be implemented according to the method described above.

As further illustrated in FIGS. 4-7, the extruded flange 96 and the first and second conduit openings 98, 100 in the second and first basins 40, 20 can be formed before the first and second basins 20, 40 are sealed together and before the core cavity material 72 is injected within the core cavity volume 70. Also, the extruded flange 96 can either be formed from the material of the second basin 40 or can be one or more separate pieces coupled to the first conduit opening 98 in the second basin 40. While not preferred, the conduit 90 may be built into the first and second basins 20, 40 after they have been sealed together or after the core cavity material 72 has been injected into the core cavity volume 70.

It should be understood that in various embodiments, the extruded flange 96 of each conduit 90 can extend from the first basin 20 to the second basin 40. In other alternate embodiments, the extruded flange 96 can be a separate extruded piece that can be coupled with the conduit openings 98, 100 in the first and second basins 20, 40.

Referring again to the illustrated embodiment as shown in FIGS. 4-7, once the conduit 90 is disposed to the first and second conduit openings 98, 100, the ends of the extruded flange 96 are hermetically sealed to the conduit openings 98, 100 thereby eliminating any fluid communication between the inner surface 102 of the extruded flange 96 and the core cavity volume 70.

It should be appreciated that the number and location of conduits 90 in the cabinet structure 74 can vary. In addition, the size, shape, and configuration of the conduits 90 are also variable. By way of example, and not limitation, it is not necessary that the conduit openings 98, 100 in the first and second basins 20, 40 have the same shape or size. In addition, in alternate embodiments, the conduit 90 may have a single conduit opening in one basin that leads to more than one conduit opening in the other basin. In such an embodiment, the conduit 90 can have a "Y" shaped junction to accommodate the differentiation in conduit openings between the two basins.

The location of the conduit 90 within the cabinet structure 74 may define the location of a specialty cooling module to be placed within and typically removably mounted to one or more interior surfaces (by hand and without the use of tools) of the refrigerator 10. In such an embodiment, the conduit 90 defines a module receptacle onto which the specialty module can be disposed. By way of explanation and not limitation, examples of specialty cooling modules can include at least one of:
a turbo chill module;
a fast freeze module;
a shock freeze module;
a temperature controlled crisper compartment module;
a fresh food compartment module;
an ice making module;
a heat exchanger module for dispensing cold or chilled water;
a heat exchanger module for creating cold or chilled water to facilitate its carbonation and dispense a carbonated beverage; and
an airless cooling module.

Referring now to FIGS. 4, 6-7 and 11-12, as described above, the cabinet structure 74 may contain a receptacle 110 configured for receiving a mullion 112. The receptacle 110 can include one or more conduits 90 that allow fluid communication from the outer surface 92 of the cabinet structure 74 without loss of the vacuum of the cavity volume 70 through the core cavity volume 70, and into an inner volume 114 of a mullion 112 that can be coupled to the receptacle 110. In various embodiments, the location of the receptacle 110 can be defined by the location of conduits 90 placed within the cabinet structure 74. The mullion 112 can be coupled to the inner surface 94 of the cabinet structure 74 at the desired location over the conduits 90 to permit the desired fluid communication between the conduit 90 and the inner volume 114 of the mullion 112.

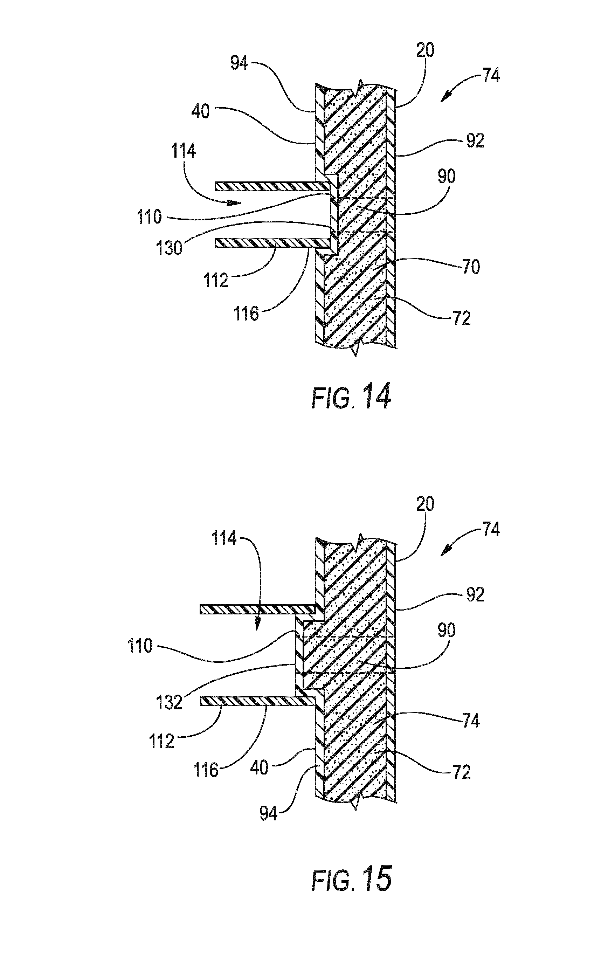

As illustrated in FIG. 14, the receptacle 110 can include a channel 130 into which the mullion 112 can be inserted, where the channel 130 defines a thinner cross-sectional thickness for the core cavity volume 70. Also, as illustrated in FIG. 15, the receptacle 110 can include a curb 132 onto which a mullion 112 can be placed. Where a curb 132 is implemented, the curb 132 defines a thicker cross-sectional thickness of the core cavity volume 70. The receptacle 110 can be formed during formation of the first and second basins 20, 40 where the channel 130 or curb 132 can be heat formed into the side wall 42 or rear wall 44 of the second basin 40. Alternatively, the curb 132 can be formed after the formation of the cabinet structure 74 and the vacuum within the core cavity volume 70, by coupling the curb 132 to the inside surface 94 of the cabinet structure 74.

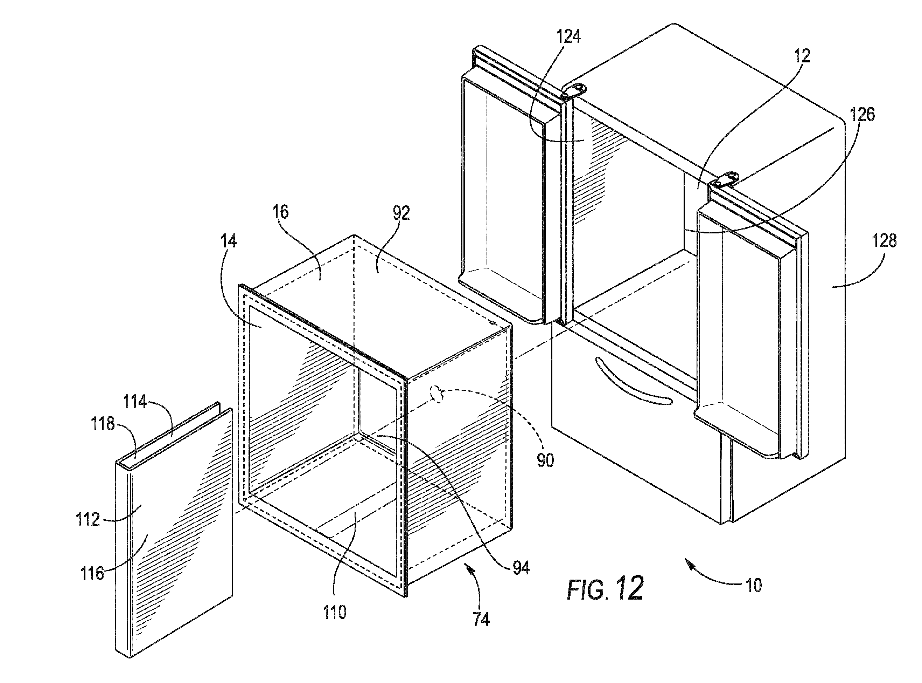

Referring again to the illustrated embodiment, as shown in FIG. 12, a mullion 112 may be placed onto the receptacle 110, where the mullion 112 receptacle includes two or more outer surfaces 116, an interior surface 118, and an interior volume 114 defined by the interior surface 118.

Also, as illustrated in FIG. 12, the mullion 112 can be attached to a receptacle 110 disposed in the interior 94 of the cabinet structure 74, where the interior surface 94 of the cabinet structure 74 and the exterior surfaces 116 of the mullion 112 cooperate to define two or more compartments 14 within the cabinet structure 74. It should be understood that in alternate embodiments, two or more mullions 112 can be coupled to the interior surface 94 of the cabinet structure 74 to define three or more compartments 114. Also, in the various embodiments, the mullion 112 can have a linear configuration that can define two compartments 14 (typically a fresh food compartment and a freezer compartment), or may have a more complex geometry, such as a "T" shaped configuration, or other more complex geometry, to define three or more compartments 14 within the cabinet structure 74.

In various embodiments, the interior volume 114 of the mullion 112 can be configured to receive mechanical equipment for operating the various functions of the refrigerator. As an example, a cooling module set can be disposed within the interior volume 114 of the mullion 112. Examples of various cooling modules sets are disclosed in U.S. Patent Application No. 13/108,226 entitled "Cooling System Integration Enabling Platform Architecture," filed on May 16, 2011; U.S. Patent Application No. 13/108,293 entitled "Flexible Cooling System Integration for Multiple Platforms," filed on May 16, 2011; and U.S. Patent Application No. 13/108,183 entitled "Universal and Flexible Cooling Module Set (CMS) Configuration and Architecture," filed on May 16, 2011. All of these references are hereby incorporated herein by reference in their entirety.

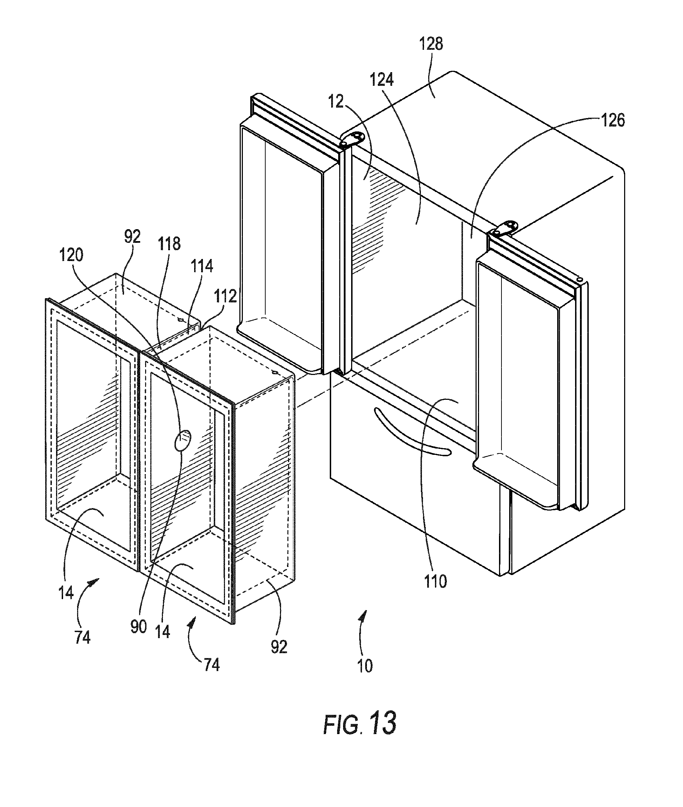

Referring back to the illustrated embodiments, as shown in FIG. 13, service openings 120 can be disposed in the mullion 112 through which mechanical services can be disposed, or through which cooling can be provided to the various compartments 14 of the refrigerator 10. A damper, louvers or other air regulating mechanism may be positioned within or substantially over or proximate the service openings 120 to regulate air flow between compartments. In the various embodiments, the mullion 112 can be made with the same material as the two basins 20, 40 that make up the cabinet structure 74. For example, the mullion 112 can be made of thermally formed high impact polystyrene or acrylonitrile butadiene styrene. Other insulative materials can be used in alternate embodiments.

In various embodiments, the mullion 112 may be integrated with the inner surface 94 of the cabinet structure 74 by being formed with the second basin 40. Alternatively, the mullion 112 may be attached directly to the inner surface 94 of the second basin 40 before the second basin 40 is coupled and sealed to the first basin 20.

Referring again to the illustrated embodiments, as shown in FIGS. 12 and 13, a refrigerator 10 can include a single compartment 14 formed by a single cabinet structure 74, or multiple compartments 14 formed by a single cabinet structure 74 that includes at least one mullion 112 configured to divide the interior 94 of the cabinet structure 74 into multiple compartments 14.

As shown in FIGS. 1 and 12-13, the refrigerator 10 can include an outer cabinet 128 having an interior 12 that defines a receptacle 126 for receiving the cabinet structure 74. The outer cabinet 128 can be metal clad. In alternate embodiments, the outer cabinet can include of a plurality of metal panels such as stainless steel aluminum or other metal-finish panels that are disposed adjacent to and typically engaged to the outer surface 92 of the cabinet structure 74. In still other alternate embodiments, the outer surface 92 of the cabinet structure 74 can also include the outer cabinet 128 of the refrigerator 10. In such an embodiment, various indicia, patterns, or colors can be disposed in the outer surface 92 of the cabinet structure 74.

Referring now to FIG. 13, a mullion 112 can be formed by coupling two complete cabinet structures 74 adjacent to one another. In this alternate embodiment, the interstitial space between the two or more cabinet structures 74 defines the interior surface 118 of the mullion 112 into which the mechanical equipment can be disposed. Conduits 90 disposed in the various cabinet 74 structures, in this embodiment, can provide the fluid communication between the interstitial space between the cabinet structures 74 to the interiors 94 of the various cabinet structures 74.

As illustrated in FIG. 13, multiple compartments 14 can also be created within the refrigerator 10 by disposing several individual cabinet structures 74 within the refrigerator 18 when the cabinet structures 74 are formed by the method described above. Alternatively, multiple compartments 14 can be created by having two or more individual cabinet structures 74 included in the refrigerator 10 where at least one of the cabinet structures 74 can be divided into additional compartments 14 through at least one mullion 112 being inserted into the receptacle 110 of one of the cabinet structures 74.

As also shown in FIG. 11, the outer surface 92 of the cabinet structure 74 disposed in the refrigerator 10 can be configured to define one or more cavities 122 where the one or more cavities 122 can also be defined by the outer surface 92 of an adjacent cabinet structure 94 or by an inner surface 124 of a refrigerator 10 receptacle 126 that receives the one or more cabinet structures 74. The one or more cavities 122 described above may be configured to receive mechanical equipment for operating the various functions of the refrigerator 10.

As illustrated in FIGS. 12 and 13, in various embodiments, the refrigerator 10 can include at least one conduit 90 disposed in the cabinet structure 74. The mechanical aspects of the refrigerator 10 can use the conduits 90 to provide cooling into various compartments 14 of the refrigerator 10 without loss of the vacuum of the core cavity volume 70.

It will be understood by one having ordinary skill in the art that construction of the described invention and other components is not limited to any specific material. Other exemplary embodiments of the invention disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It can be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the scope of the present invention as defined by the claims.

It will be understood that any described processes or steps within described processes may be combined with other disclosed processes or steps to form structures within the scope of the present invention. The exemplary structures and processes disclosed herein are for illustrative purposes and are not to be construed as limiting.
It is also to be understood that variations and modifications can be made on the aforementioned structures and methods without departing from the scope of the present invention as defined by the following claims.

## Claims

1. A method for creating a vacuum insulated cabinet structure comprising the steps of:
forming a first basin having at least four side walls defining a first basin opening, a rear wall, a first basin inner facing surface, a first basin outer facing surface, and a first basin integrated perimetrical flange extending from the first basin opening, wherein the first basin integrated perimetrical flange comprises a front facing surface;
forming a second basin having at least four side walls defining a second basin opening, a rear wall, a second basin inner facing surface, a second basin outer facing surface, and a second basin integrated perimetrical flange extending away from the second basin opening, wherein the second basin integrated perimetrical flange comprises a rear facing surface;
disposing a barrier film onto the first and second basins, the barrier film comprising a hermetic barrier film and a heat sealing layer;
disposing the front facing surface of the first basin integrated perimetrical flange to the rear facing surface of the second basin integrated perimetrical flange such that the first basin inner facing surface is disposed proximate the second basin outer facing surface thereby defining a cabinet structure and further defining a core cavity volume configured to maintain a vacuum within the core cavity between the first basin and the second basin;
disposing at least one core material into the core cavity volume, wherein the core cavity material is a low thermal conductivity material;
hermetically sealing the front facing surface of the first basin integrated perimetrical flange and the rear facing surface of the second integrated perimetrical flange together, wherein the heat sealing layer on the first basin is sealed to the heat sealing layer of the second basin; and
extracting gas from the core cavity volume through at least one port disposed on the cabinet structure, to create the vacuum within the core cavity and form the vacuum insulated cabinet structure.

2. The method of claim 1, wherein the step of disposing at least one core material into the core cavity volume further includes:
forming the core material into a pre-formed insulative layer; and
disposing the pre-formed insulative layer within the first basin proximate the first basin inner facing surface.

3. The method of claim 1 or 2, wherein the at least one core cavity material is injected into the core cavity after the front facing surface of the first basin integrated perimetrical flange and the rear facing surface of the second integrated perimetrical flange are sealed together, and wherein the at least one port includes at least one injection port through which the core material is injected into the core cavity volume, and a separate at least one vacuum port through which gas is extracted from the core cavity volume.

4. The method of claim 1, 2 or 3, wherein the first basin and second basin integrated perimetrical flanges are configured to be outwardly extending planar flanges.

5. The method of any one of the preceding claims, wherein the vacuum insulated cabinet structure further comprises:
a compartment surface defined by the second inner facing surface; and
at least one integrated mullion integrated with the compartment surface, wherein the integrated mullion and the compartment surface define at least two sub compartments within the vacuum insulated cabinet structure.

6. The method of claim 5, wherein a cooling module set is disposed within an interior of the integrated mullion.

7. The method of any one of the preceding claims, wherein the cabinet structure includes at least one conduit disposed in the cabinet structure and through the core cavity, each at least one conduit defined by a substantially tubular extrusion comprising a first basin end, a second basin end, and a length substantially defined by the perpendicular thickness of the core cavity, and wherein the substantially tubular extrusion extends from a second basin conduit opening in any one of one of the rear wall or the at least four side walls of the second basin to a first basin conduit opening in a corresponding location in the first basin, wherein the first and second basin ends of the substantially tubular extrusion are sealed at the first basin conduit opening and the second basin conduit opening, respectively, to maintain a vacuum within the core cavity.

8. The method of claim 7, wherein the cabinet structure further comprises:
at least one mullion receptacle defined by the second inner facing surface, each at least one mullion receptacle comprising one or more of the at least one conduit and a receptacle channel formed within the rear wall and at least two of the at least four side walls of the second basin, wherein the receptacle channel comprises a first receptacle edge, a second receptacle edge, and a receptacle face, wherein the conduit is disposed on the receptacle face.

9. A method for creating an integral vacuum insulated appliance cabinet comprising the steps of:
providing an insulative first basin having at least four side walls defining a first basin opening, a rear wall, a first basin inner facing surface, a first basin outer facing surface, and a first basin integrated perimetrical planar flange extending away from the first basin opening, wherein the first basin integrated perimetrical planar flange comprises a front facing surface;
providing an insulative second basin having at least four side walls defining a second basin opening, and a rear wall, a second basin inner facing surface, a second basin outer facing surface, and a second basin integrated perimetrical planar flange extending away from the second basin opening, wherein the second basin integrated perimetrical planar flange comprises a rear facing surface;
disposing a barrier film onto the first and second basins, the barrier film comprising a hermetic barrier film and a heat sealing layer;
disposing the front facing surface of the first basin integrated perimetrical flange to the rear facing surface of the second basin integrated perimetrical flange such that the first basin inner facing surface is disposed proximate the second basin outer facing surface thereby defining a cabinet structure and further defining a core cavity volume configured to maintain a vacuum within the core cavity between the first basin and the second basin;
disposing at least one core material into at least a portion of the core cavity, wherein the core material is a low thermal conductivity material;
hermetically sealing the cavity volume; and
extracting gas from the core cavity volume through at least one port disposed on the cabinet structure, to create the vacuum within the core cavity and form the vacuum insulated cabinet structure.

10. The method of claim 9, wherein the core material comprises a preformed insulative core layer disposed into at least substantially all of the volume of the core cavity.

11. The method of claim 9 or 10, wherein the first and second basins are high impact polystyrene thermally formed to have substantially the same shape, and wherein the perpendicular distance between the first basin inner facing surface and the second basin outer facing surface of the formed cabinet structure is substantially consistent throughout the core cavity, and wherein the cabinet structure includes a mechanical recess defining a mechanical recess volume, and wherein the mechanical recess is defined by the first basin outer facing surface.

12. The method of claim 9, 10 or 11, wherein the cabinet structure includes at least one conduit disposed in the cabinet structure and through the core cavity, each at least one conduit defined by a substantially tubular integrated extrusion extending from a first basin conduit opening in any one of the side or rear walls of the second basin, wherein the substantially tubular integrated extrusion extends a length substantially defined by the perpendicular thickness of the core cavity to a first basin conduit end, and wherein when the cabinet structure is formed, the first basin conduit end is coupled with a first basin conduit opening disposed in a corresponding rear wall or side wall of the first basin, and wherein the fist basin conduit end is hermetically sealed to the first basin conduit opening to maintain the vacuum within the core cavity.

13. The method of claim 12, wherein the cabinet structure comprises:
a compartment surface defined by the second inner facing surface;
at least one mullion receptacle, defined by a receptacle channel disposed on the compartment surface, wherein the at least one conduit is disposed in the receptacle channel of the at least one mullion receptacle;
one or more mullions coupled with the at least one mullion receptacle, wherein each of the one or more mullions comprise two or more sub-compartment surfaces, and a mullion interior in thermal communication with at least one of the at least one conduit;
at least one cooling module set disposed on the interior of at least one of the one or more mullions; and
two or more sub-compartments disposed within the vacuum insulated cabinet structure and defined by the compartment surface and the two or more sub-compartment surfaces of each of the one or more mullions.

14. A refrigerator having a vacuum insulated cabinet or cabinet structure formed in accordance with any one of the preceding claims, the refrigerator comprising:
a first basin having at least four side walls defining a first basin opening, a rear wall, a first basin inner facing surface and a first basin outer facing surface, and a first basin integrated perimetrical flange extending from the first basin opening, wherein the first basin integrated perimetrical flange comprises a front facing surface;
a second basin having at least four side walls defining a second basin opening, and a rear wall, a second basin inner facing surface and a second basin outer facing surface, and a second basin integrated perimetrical flange extending away from the second basin opening, wherein the second basin integrated perimetrical flange comprises a rear facing surface;
a barrier film disposed on the first and second basins, wherein the barrier film includes a hermetic barrier film and a heat sealing layer;
wherein the front facing surface of the first basin integrated perimetrical flange is hermetically sealed to the rear facing surface of the second basin integrated perimetrical flange such that the first basin inner facing surface is disposed proximate the second basin outer facing surface thereby defining a cabinet structure and further defining a core cavity volume configured to maintain a vacuum within the core cavity between the first basin and the second basin; and
at least one core material disposed substantially throughout the core cavity, wherein the at least one core cavity material is a low thermal conductivity material.

15. The refrigerator of claim 14, the refrigerator further comprising a metal clad outer cabinet having an interior surface defining a receptacle configured to receive the cabinet structure.
